# EUROPÄISCHE PATENTSCHRIFT

(11) **EP 0 780 689 B1**
(45) Veröffentlichungstag und Bekanntmachung des Hinweises auf die Patenterteilung: **11.04.2001**
(21) Anmeldenummer: 96119826.4
(22) Anmeldetag: 11.12.1996
(51) Int. Cl.: G01P 3/48

(54) **Verfahren und Schaltungsanordnung zur Drehzahlermittlung eines mit einem Generator gekoppelten Verbrennungsmotors**
Method and circuit arrangement for determining the rotational speed of an internal combustion engine coupled with a generator
Procédé et montage de circuit pour déterminer la vitesse angulaire d'un moteur à combustion interne couplée à un générateur

(30) Priorität: 21.12.1995 DE 19547832
(43) Veröffentlichungstag der Anmeldung: 25.06.1997
(73) Patentinhaber: GRUNDIG Aktiengesellschaft, 90471 Nürnberg (DE)
(72) Erfinder: Stark, Thomas, Kurgartenstrasse 37, 90762 Furth (DE)

(56) Entgegenhaltungen:
- EP-A- 0 315 357
- EP-A- 0 337 100
- EP-A- 0 408 877
- DD-A- 269 683
- DE-A- 4 440 999
- DE-U- 29 501 404

## Beschreibung

Die Erfindung betrifft ein Verfahren zur Drehzahlermittlung eines mit einem Generator gekoppelten Verbrennungsmotors gemäß dem Oberbegriff des Patentanspruchs 1 und eine Schaltungsanordnung zur Durchführung des Verfahrens nach dem Oberbegriff des Patentanspruchs 3.

Es ist allgemeiner Stand der Technik, die Drehzahl fremdgezündeter Verbrennungsmotoren (Ottomotoren) aus den an der Zündspule auftretenden Hochspannungs-Zündimpulsen für die Zündkerzen zu ermitteln. Hierfür wird meist ein Kabel, welches die Zündimpulse leitet, mit einer geeigneten Abgreifklemme versehen, wodurch die auftretenden Zündimpulse detektiert und gezählt werden können.

Dabei ist von Nachteil, daß bei modernen fremdgezündeten Verbrennungsmotoren die Zündspulen direkt benachbart zu den Zündkerzen angeordnet sind, so daß ein Abgreifen der Zündimpulse sehr erschwert wird. Weiterhin werden moderne Verbrennungsmotoren meist gekapselt ausgeführt, wodurch ein Kabel für die Zündimpulse nur schwer oder gar nicht zugänglich ist. Daher ist auch das Befestigen einer Abgreifklemme schwierig. Durch die dabei an den Leitungen auftretenden Zugkräfte können außerdem Defekte entstehen.

Bei selbstzündenden Verbrennungsmotoren (Dieselmotoren) ist keine Zündspule vorhanden, so daß eine andere Methode zur Drehzahlermittlung angewandt werden muß. Bei einem Dieselmotor wird die Drehzahl in der Regel durch eine optische Detektion einer Marke, welche auf einem mit der Motordrehzahl rotierenden Teil angebracht ist oder durch piezoelektrische Schwingungssensoren, die an eine Kraftstoffeinspritzleitung geklemmt werden, ermittelt.

Dabei ist von Nachteil, daß bei modernen Kraftfahrzeugen mit gekapselten Motoren oftmals keine Möglichkeit mehr besteht, an rotierende Teile oder die Einspritzleitungen heranzukommen und auf herkömmliche Weise die Drehzahl zu erfassen. Weiterhin sind diese Methoden großteils unzuverlässig und weisen eine hohe Fehlerrate auf. Durch Verschmutzung der optisch detektierten Marke oder durch Resonanzfrequenzen wird eine korrekte Drehzahlermittlung erschwert.

Aus der DE 39 23 532 ist ein Verfahren zur Drehzahlermittlung einer Brennkraftmaschine bekannt. Dabei wird zunächst die Drehzahl eines Generators für die Stromversorgung, der durch den Verbrennungsmotor angetrieben wird, aufgrund der Welligkeit seiner gleichgerichteten Ausgangsspannung ermittelt. Außerdem wird das Übersetzungsverhältnis zwischen Generator und Verbrennungsmotor mit Hilfe von FM-Demodulation der Welligkeit der Ausgangsspannung des Generators bestimmt und aus diesen beiden Größen die Drehzahl des Verbrennungsmotors berechnet. Dadurch benötigt dieses Verfahren nur eine Verbindung zum Bordnetz des Fahrzeuges, sei es an der Starterbatterie oder im Fahrgastraum am Zigarettenanzünder. Das Verfahren ist sowohl für fremdzündende als auch für selbstzündende Verbrennungsmotoren gleichermaßen geeignet.

Dabei ist von Nachteil, daß die Berechnung des Übersetzungsverhältnisses zwischen Generator und Verbrennungsmotor mit Hilfe der FM-Demodulation relativ lange benötigt, um einen genauen Wert zu ermitteln. Weiterhin besteht ein Nachteil darin, daß keine digitale Realisierung für die Ermittlung des Übersetzungsverhältnisses bekannt ist.

Aus EP-A-0 408 877 ist ein Verfahren zur Drehzahlermittlung einer Brennkraftmaschine bekannt. Dabei wird zunächst die Drehzahl eines Generators für die Stromversorgung, der durch den Verbrennungsmotor angetrieben wird, aufgrund der Welligkeit seiner gleichgerichteten Ausgangsspannung ermittelt. Das Übersetzungsverhältnis zwischen Generator und Verbrennungsmotor wird mit Hilfe von FM-Demodulation der Welligkeit der Ausgangsspannung des Generators bestimmt. Aus den hierdurch ermittelten Größen wird die Drehzahl des Verbrennungsmotors berechnet. Dadurch benötigt dieses Verfahren nur eine Verbindung zum Stromnetz des Fahrzeuges. Dieses Verfahren ist für fremdgezündete, als auch selbstzündende, Verbrennungsmotoren gleichermaßen geeignet. Nachteilig bei diesem Verfahren ist jedoch, daß die Berechnung des Übersetzungsverhältnisses zwischen Generator und Verbrennungsmotor mit Hilfe einer FM-Demodulation relativ lange benötigt, um einen genauen Wert zu ermitteln. Der FM-Demodulator benötigt eine Einschwingzeit. Der Demodulator wird über Kommutierungsschwingungen der Lichtmaschine und ein adaptives Filter gesteuert. Es wird eine Plausibilitätskontrolle zwingend vorgeschrieben, da andemfalls das Meßergebnis verfälscht sein kann. Im weiteren liegt bei dieser Art der Ermittlung ein hoher relativer Meßfehler vor, da die FM-Demodulation mit einem großen Toleranzbereich erfolgt. Werden die Signale von der Amplitude her klein, oder liegen Signalaussetzer vor, so treten bei dem beschriebenen Verfahren Meßfehler auf was dazu führt, daß keine Drehzahl ermittelt wird. Es sind daher weitere Maßnahmen erforderlich um die Störanfälligkeit zu beheben. Im weiteren ist zu berücksichtigen, daß die FM-Demodulation voraussetzt, daß die zu ermittelten Frequenzen konstant sind. Daher ist aus der Erfindung offenbart, die Leerlaufdrehzahl eines Motors zu erfassen, bzw. stets eine konstante Drehzahl eines Motors. Ältere Fahrzeuge weisen meist eine Schwankung der Leerlaufdrehzahl auf. Im Falle einer derartigen Schwankung ist das beschriebenen
Verfahren nur dann in der Lage eine genauere Leerlaufdrehzahl zu ermitteln, wenn die Einlernphase besonders lange andauert, da nur dann über eine Mitteilung der Ergebnisse eine mittlere Leerlaufdrehzahl bestimmt werden kann.

DE-A-44 40 999 beschreibt ein Verfahren zur Messung der Drehgeschwindigkeit einer ein periodisches akustisches Signal erzeugenden rotierenden Maschine.
Aufgabe der Erfindung ist es, ein Verfahren zur Messung einer gesuchten Frequenz in einem akustischen Signal durch eine Analyse im Frequenzbereich durchzuführen. Hierzu wird mittels eines Meßwandlers, eines Mikrofons, das akustische Signal der Maschine erfaßt und dieses Signal analysiert. Aus diesem Verfahren ist folglich bekannt eine Begrenzung der Fouriertransformation im Frequenzbereich zur Unterdrückung hochfrequenter Signalanteile durchzuführen. Hierbei wird über den zu erwartenden Frequenzbereich ein Bandpaßfilter gelegt.
Da dieses Verfahren die Grundfrequenz des Motors bestimmt, folglich Frequenzen im Bereich von typisch 20Hz bis 200Hz (vgl. Spalte 5, Zeile 26) entstehen relativ lange Meßzeiten. Damit ist das Verfahren ungeeignet zum erfassen dynamischer Drehzahländerungen. Dieses Verfahren benötigt eine lange Zeit, bis aus dem akustischen Signal die Frequenz ermittelt werden kann.

Aus EP-A-0 337 100 ist offenbart, ein Zeitsignal in den Frequenzbereich zu transformieren. Es wird die Drehzahl bei einem Gleichstromnebenflussmotor ermittelt. Über einen speziellen Sensor wird zunächst die Drehzahl ermittelt und aus der Drehzahl anschließend das Übersetzungsverhältnis.

Aus DE-U-2 95 01 404 ist eine Schaltung zur Erfassung der Bewegung eines Kraftfahrzeugs über eine Fläche mit wenigstens einem Sensor und einer Auswertschaltung bekannt. Hierbei wird die Geschwindigkeit eines Fahrzeuges, sowie die Beschleunigung des Fahrzeuges erfaßt und über eine Ausgabesignalschaltung ermittelt.

Somit liegt der Erfindung die Aufgabe zugrunde, ein schnelles und genaues Verfahren zur Drehzahlermittlung eines mit einem Generator gekoppelten Verbrennungsmotors anzugeben, bei dem die Ermittlung des Übersetzungsverhältnisses zwischen Verbrennungsmotors und Generator aus der Welligkeit der Generatorspannung verbessert wird. Weiterhin soll eine möglichst digitale Schaltungsanordnung zur Durchführung dieses Verfahrens angegeben werden.

Diese Aufgabe wird dadurch gelöst, daß in einer Einlernphase das gleichgerichtete Ausgangssignal des Generators an einer leicht zugänglichen Stelle im Bordspannungsnetz abgegriffen und in den Frequenzbereich transformiert wird. Anschließend wird die Frequenz des Maximums, welches bei der niedrigsten Frequenz auftritt, und die Frequenz des absoluten Maximums des Leistungsdichtespektrums bestimmt. Der Quotient aus diesen beiden Frequenzen ist das Übersetzungsverhältnis zwischen Generator- und Motordrehzahl. Dieser wird nach der Einlernphase benutzt, um aus der Generatordrehzahl, welche durch das absolute Maximum des Leistungsdichtespektrums charakterisiert wird, die zeitvariante Motordrehzahl zu ermitteln.

Dabei ist von Vorteil, daß die Einlernphase bei einer für die Bestimmung der beiden benötigten Frequenzen optimalen Drehzahl erfolgen kann, wodurch das Verfahren in Genauigkeit und Geschwindigkeit verbessert wird. Das daraus berechnete Übersetzungsverhältnis wird für eine Verbrennungsmotor/Generator-Anordnung nach der Einlernphase bei zeitvarianter Drehzahl beibehalten. Weiterhin von Vorteil ist, daß die Transformation in den Frequenzbereich beliebig genau erfolgen kann. Durch eine große Anzahl Abtastwerte der vom Generator erzeugten Netzspannung kann die Genauigkeit verbessert werden. Weiterhin ist von Vorteil, daß kein FM-Demodulator benötigt wird, sondern eine Transformation erfolgt, die durch digitale Baugruppen durchgeführt werden kann. Dadurch läßt sich die Anordnung gut integrieren und mit nur geringem zusätzlichen Schaltungsaufwand von bereits vorhandenen Mikroprozessoren der Schaltungseinheiten durchführen, die die Drehzahlinformation benötigen.

Vorteilhafte Ausgestaltungen sind den abhängigen Ansprüchen zu entnehmen.

Die Erfindung wird im folgenden anhand der in der Zeichnung dargestellten Ausführungsform näher erläutert und beschrieben. Es zeigt:
- Fig. 1: einen typischen Verlauf der Bordspannung eines Kraftfahrzeugs mit laufendem Motor abhängig von der Zeit,
- Fig. 2: eine mögliche erfindungsgemäße Schaltungsanordnung,
- Fig. 3: ein Leistungsdichtespektrum eines typischen Bordspannungsverlaufs, wie in Fig. 1 dargestellt, und
- Fig. 3a: ein möglicher vergrößerter Ausschnitt aus Fig. 3.

Im folgenden Ausführungsbeispiel wird davon ausgegangen, daß es sich bei dem Verbrennungsmotor, dessen Drehzahl ermittelt werden soll, um einen Kfz-Motor handelt, der mit einem bestimmten Übersetzungsverhältnis einen Generator zur Stromerzeugung antreibt. Die vom Generator erzeugte Spannung steht im gesamten Bordnetz zur Verfügung.

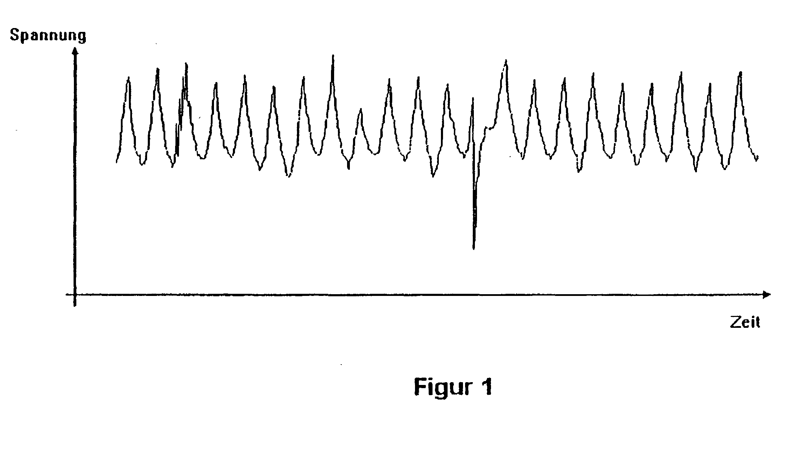

Figur 1 zeigt einen typischen zeitlichen Verlauf der Bordspannung eines Kraftfahrzeuges mit laufendem Motor. Der im Vergleich zu den interessierenden Spannungsanteilen hohe Gleichspannungsanteil ist zur Vereinfachung nicht dargestellt.

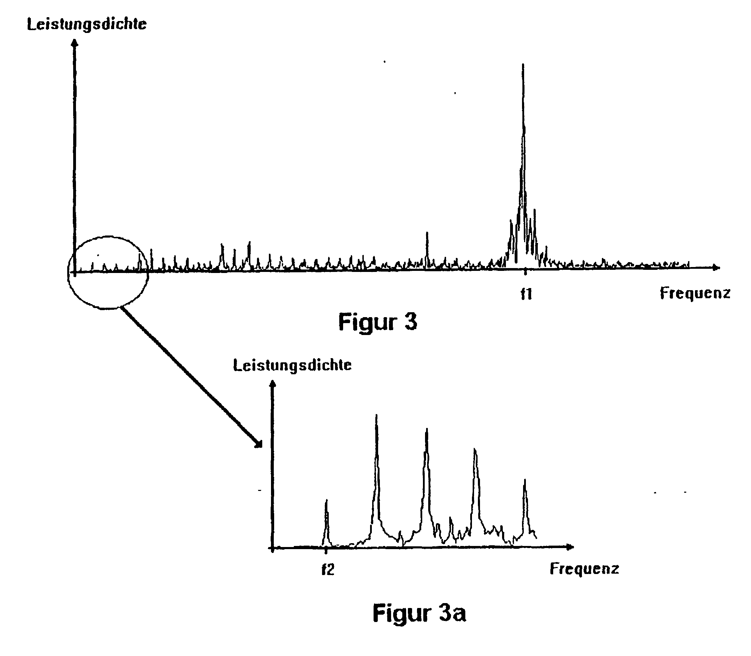

Figur 3 und 3a zeigen das Leistungsdichtespektum des Signals von Figur 1 über der Frequenz. Gut zu erkennen ist das absolute Maximum des Leistungsdichtespektrums bei der Frequenz f1; Figur 3a stellt dabei einen vergrößerten Ausschnitt im unteren Frequenzbereich von Figur 3 dar, der ein erstes Maximum beinhaltet, das bei der niedigsten Frequenz f2 auftritt.

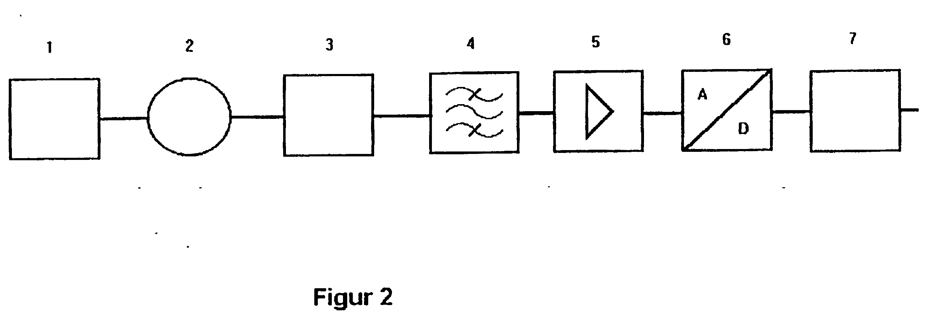

Figur 2 zeigt das Blockschaltbild einer erfindungsgemäßen Einrichtung zur Erfassung der Drehzahl gemäß dem erfindungsgemäßen Verfahren. Der von dem Verbrennungsmotor 1 angetriebene Generator 2 liefert elektrische Energie an das Bordnetz 3 des Kraftfahrzeuges. Dieser Stromfluss ist nicht kontinuierlich, sondern bedingt durch seine Erzeugung im Generator zunächst als Wechsel- oder Drehstrom vorhanden und durch die anschließende Gleichrichtung, die in der Regel unmittelbar im Generator erfolgt, als pulsförmiger Gleichstrom im Bordnetz 3 detektierbar. Diese Stromimpulse führen an Leitungswiderständen des Bordnetzes 3 zu Spannungen, wie in Figur 1 dargestellt.

Die Frequenz f1 der sogenannten Hauptkomponente aus Fig. 3 ergibt sich aus der Drehzahl des Generators, sowie aus der Bauart des Generators, insbesondere der Polpaarzahl und der Phasenzahl. Polpaarzahl und Phasenzahl des Generators gehen dabei in das Übersetzungsverhältnis, welches in der Einlernphase bestimmt wird, ein und müssen bei späteren Messungen nicht mehr berücksichtigt werden. In Verbindung mit dem Übersetzungsverhältnis zwischen Verbrennungsmotor und Generator kann von der Drehzahl des Generators auf die Drehzahl des Verbrennungsmotors rückgeschlossen werden.

Neben dieser durch den Generator verursachten Spannungskomponente bei der Frequenz f1 finden sich im Bordnetz immer auch Frequenzanteile mit der Zündfrequenz oder der Pumpfrequenz der Kraftstoffeinspritzanlage des Verbrennungsmotors, wie in Fig. 3a als Spannungskomponente mit der Frequenz f2 dargestellt. Diese Anteile entstehen durch Einstreuungen der Zündanlage oder der Kraftstoffeinspritzanlage. Sie sind proportional zur Drehzahl des Verbrennungsmotors und von dem Arbeitsprinzip (Zweitakt-oder Viertaktmotor) und der Zylinderzahl abhängig.

Das Übersetzungsverhältnis kann somit bei bekanntem Arbeitsprinzip und Zylinderzahl des Verbrennungsmotors aus dem Quotienten der Frequenzen f1 und f2 berechnet werden.

Hierfür trennt ein Bandpass 4 die im Bordnetz überlagerte Wechselspannung mit den interessierenden Frequenzanteilen f1 und f2 von der Gleichspannung ab und unterdrückt hochfrequente Störanteile. Ein Verstärker 5 verstärkt die bandpaßgefilterten Wechselspannungskomponenten und ein Analog/Digitalwandler 6 wandelt den analogen Spannungsverlauf passend für die digitale Signalverarbeitungseinheit 7 in digitale Abtastwerte um. Im einfachsten Fall besteht der Analog-Digitalwandler 6 aus einer Spannungskomparatorschaltung, die nur entscheidet, ob der Spannungspegel über oder unter einer fest eingestellten Schwelle liegt.

Die digitale Signalverarbeitungseinheit 7 kann z.B. aus einem Mikrokontroller oder digitalen Signalprozessor bestehen. Ihre Leistungsfähigkeit ergibt sich aus der geforderten Meßzykluszeit. Die Signalverarbeitungseinheit 7 kann auch Bestandteil einer Schaltungseinheit zur weiteren Auswertung der Drehzahlinformation sein.

Die digitale Signalverarbeitungseinheit 7 führt in einer Einlernphase, in der der Kraftfahrzeugmotor im Leerlauf mit möglichst konstanter Drehzahl betrieben wird, eine Fouriertransformation mit so vielen Meßwerten, wie für die gewünschte Frequenzauflösung benötigt werden durch, um die Zündfrequenz f2 und die Drehzahl des Generators aus f1 hinreichend genau zu bestimmen. Bei bekannter Zylinderzahl und Arbeitsprinzip (Zweitakt oder Viertakt) des Verbrennungsmotors berechnet die Signalverarbeitungseinheit 7 daraus die Kurbelwellendrehzahl und die Drehzahl des Generators.

Die Frequenz f2 ist dabei sehr niedrig, bei einem Vierzylinder-Viertaktmotor im Leerlauf ca. 25 Hz, so daß die benötigten Meßzeiten für eine kontinuierliche Ermittlung der Drehzahl, etwa beim Beschleunigen des Verbrennungsmotors, zu lang sind. Die Frequenzkomponente f1 ist um einen festen, bauartbedingten Übersetzungsfaktor größer als f2. Typische Werte für f1 im Leerlauf sind 1 kHz bis 1,5 kHz, so daß bei bekanntem Übersetzungsverhältnis mit wesentlich kürzeren Meßzeiten die Drehzahl aus der Frequenz f1 bestimmt werden kann. In einer Einlernphase wird daher zunächst das Übersetzungsverhältnis f1/f2 bestimmt, das für weitere Messungen an einem Fahrzeug zur Berechnung der Drehzahl aus der Frequenz f1 beibehalten wird.

Um ein eindeutiges Erkennen der Drehzahl, insbesondere der Leerlaufdrehzahl, zu ermöglichen, wird im Frequenzbereich eine Fensterfunktion über den zu erwartenden Drehzahlbereich gelegt. Hierdurch werden Oberwellen, welche die Messung beeinflussen könnten, ausgeblendet. Vor allem läßt sich hierdurch die Leerlaufdrehzahl eindeutig bestimmen, da beispielsweise die Fensterfunktion den Frequenzbereich auf größer 700 Umdrehungen pro Minute oder den Bereich kleiner 700 Umdrehungen pro Minute einschränkt. Da im vornherein der Frequenzbereich der zu erwartenden Leerlaufdrehzahl des Motors bekannt ist, werden durch die Fensterfunktion nur die für die Messung relevanten Frequenzbereiche berücksichtigt. Hierdurch läßt die Leerlaufdrehzahl sowohl bei Fahrzeugen mit Fremdzündung, als auch bei Fahrzeugen mit Selbstzündung ermitteln.

Im weiteren werden die Abtastwerte vor der FFT-Transformation - folglich im Zeitbereich - mit einer Fensterfunktion überlagert, wodurch Oberwellen vermieden werden. Die Überlagerung mit einer Fensterfunktion führt zu einer Glättung der Abtastwerte zu Beginn und am Ende der Abtastung. Als besonders Vorteilhaft hat sich in diesem Bereich eine Gaußsche Glockenkurve, eine Hamming-Fensterfunktion, eine Sigma-Funktion oder auch eine einfache Quadratfunktion erwiesen.

Desweiteren hat sich als vorteilhaft erwiesen, daß das Verfahren auch mittels eines Beschleunigungssensors arbeiten oder durch einen Beschleunigungssensor ergänzt werden kann. In diesem Falle bringt man einen Beschleunigungssensor in der Nähe des Fahrzeuges oder am Fahrzeug an, dessen Drehzahl bestimmt werden soll. Mittels des Beschleunigungssensors werden die Vibrationen des Motors detektiert und digitalisiert. Diese digitalisierten Werte werden dann in den Frequenzbereich transformiert. Anschließend wird, ebenso wie beim Abgriff der Bordnetzspannung, die Frequenz des absoluten Maximums des Leistungsdichtespektrums ermittelt. Dieses ist folglich die.Drehzahl des Motors.

In einer einfacheren Ausführungsform kann auch ein akustischer Sensor oder ein Mikrofon den Beschleunigungssensor ersetzen.

Zur Erfassung der Daten kann der Beschleunigungssensor an jedem beliebigen Ort in oder an der Fahrgastzelle beziehungsweise am oder im Fahrzeug oder - insbesondere beim Einsatz eines Mikrofons - außerhalb des Fahrzeuges (in einem Umkreis von bis zu 3 Metern) angebracht werden. Als besonders vorteilhaft hat sich aber die Anbringung des Beschleunigungssensors am Armaturenbrett, an der Windschutzscheibe oder im Fußraum der Fahrgastzelle erwiesen.

Die Datenerfassung über den Beschleunigungssensor eignet sich vor allem zur Bestimmung der Leerlaufdrehzahl.
Der Einsatz ist vor allem als Plausibilitätsmessung gedacht, wenn bei der Messung über das Bordnetz kein eindeutiges Ergebnis ermittelt werden kann. In diesem Fall wird über den Beschleunigungssensor die Leerlaufdrehzahl ermittelt und als Plausibilitätsmessung herangezogen.

Es ist im weiteren eine Hand-Eingabe über eine Schnittstellle vorgesehen, um das Übersetzungsverhältnis einzugeben. Hierdurch wird die Möglichkeit eröffnet in Fällen, in denen eine Bestimmung des Übersetzungsverhältnisses nicht möglich ist, dennoch eine Messung durchführen zu können.

## Patentansprüche

1. Verfahren zur Drehzahlermittlung eines mit einem Generator verbundenen Verbrennungsmotors, insbesondere eines Antriebsmotors eines Kraftfahrzeugs, wobei der Verbrennungsmotor (1) eine bekannte Zylinderzahl und ein bekanntes Arbeitsprinzip hat, wobei der Generator (2) von dem Verbrennungsmotor (1) mit einem festen Übersetzungsverhältnis angetrieben wird, bei dem aus der Welligkeit der in das Bordnetz (3) eingespeisten gleichgerichteten Generatorspannung die Drehzahl des Verbrennungsmotors (1) ermittelt wird, und das Übersetzungsverhältnis zwischen Generator (2) und Verbrennungsmotor (1) automatisch in einer Einlemphase bestimmt wird,
**dadurch gekennzeichnet,**
daß die Einlernphase durch eine Transformation der digitalisierten Anteile der gleichgerichteten Ausgangsspannung des Generators (2) in den Frequenzbereich erfolgt und das Verhältnis der Frequenz mit maximaler Leistungsdichte zur niedrigsten auftretenden Frequenz als Übersetzungsverhältnis zwischen Generator (2) und Verbrennungsmotor (1) ermittelt wird und daß nach der Einlernphase aus der Generatordrehzahl und dem besagten Übersetzungsverhältnis die Drehzahl des Verbrennungsmotors (1) ermittelt wird.

2. Verfahren nach Anspruch 1,
**dadurch gekennzeichnet,**
daß die gleichgerichtete Ausgangsspannung des Generators (2) bandpaßgefiltert, verstärkt und analog/digital gewandelt wird und daß die derart erzeugten Abtastwerte einer diskreten Fouriertransformation unterworfen werden.

3. Verfahren nach Anspruch 1 oder 2,
**dadurch gekennzeichnet,**
daß über den zu erwartenden Drehzahlbereich, im Frequenzbereich, eine Fensterfunktion gelegt wird, wodurch Oberwellen unterdrückt werden.

4. Verfahren nach Anspruch 3,
**dadurch gekennzeichnet,**
daß die Fensterfunktion nach dem Frequenzbereich ausgewählt wird, in dem die zu erwartende Drehzahl des Motors liegt.

5. Verfahren nach Anspruch 3,
**dadurch gekennzeichnet,**
daß die Abtastwerte im Zeitbereich vor der Transformation in den Frequenzbereich mit einer Fensterfunktion überlagert werden.

6. Verfahren nach einem der Ansprüche 3 bis 5,
**dadurch gekennzeichnet,**
daß die Fensterfunktion durch eine Sigma-Funktion, eine Gaußsche Glockenkurve, eine Hamming-Funktion oder eine Quadratfunktion realisiert wird.

7. Verfahren nach einem der Ansprüche 3 bis 6,
**dadurch gekennzeichnet,**
daß zur Überprüfung der Plausibilität eine Messung der Leerlaufdrehzahl mittels eines Beschleunigungssensors durchgeführt wird.

8. Verfahren nach Anspruch 7,
**dadurch gekennzeichnet,**
daß der Beschleunigungssensor durch einen akustischen Sensor oder ein Mikrofon ersetzt werden kann.

9. Verfahren nach einem der Ansprüche 7 oder 8,
**dadurch gekennzeichnet,**
daß der Beschleunigungssensor oder der akustische Sensor oder das Mikrofon an jedem beliebigen Ort im, am oder im Umkreis um das Fahrzeug angeordnet werden kann.

10. Schaltungsanordnung zur Durchführung des Verfahrens nach einem der Ansprüche 1 bis 9,
**gekennzeichnet durch**
einen Bandpaßfilter (4) zur Filterung der Spannung des Bordnetzes (3), einen Analog/Digitalwandler (6) zur Digitalisierung des bandbegrenzten Ausgangssignal des Bandpasses (4) und eine Baugruppe (7) zur Durchführung einer diskreten Fouriertransformation des digitalisierten Signals und zur Umwandlung des digitalisierten Signals in ein Leistungsdichtespektrum und zur Ermittlung des Verhältnisses der Frequenz mit maximaler Leistungsdichte zur niedrigsten auftretenden Frequenz im Leistungsdichtespektrum und zur Ermittlung der Motordrehzahl aus der Generatordrehzahl und aus dem besagten Verhältnis.

11. Schaltungsanordnung nach Anspruch 10
**dadurch gekennzeichnet,**
daß der Bandpaßfilter (4) eine obere Grenzfrequenz von ca. 20 kHz aufweist.

12. Schaltungsanordnung nach Anspruch 10 oder 11,
**dadurch gekennzeichnet,**
daß der Analog/Digital-Wandler (6) aus einem Spannungskomparator besteht.

13. Schaltungsanordnung nach Anspruch 10,
**dadurch gekennzeichnet,**
daß nach dem Bandpaßfilter (4) ein Verstärker (5) vorgesehen ist.

14. Schaltungsanordnung nach einem der Ansprüche 10 bis 13,
**gekennzeichnet durch,**
eine Einheit in der Signalverarbeitungseinheit (7) zur Fensterung des zu erwartenden Frequenzbereichs, um die Oberwellen zu unterdrücken.

15. Schaltungsanordnung nach einem der Ansprüche 10 bis 14,
**gekennzeichnet durch,**
eine Einheit in der Signalverarbeitungseinheit (7) zur Überlagerung der Abtastwerte vor der Transformation in den Frequenzbereich mit einer Fensterfunktion.

16. Schaltungsanordnung nach einem der Ansprüche 10 bis 15,
**gekennzeichnet durch,**
einen Beschleunigungssensor zur Ermittlung von Abtastwerten für eine Plausibilitätsmessung der Leerlaufdrehzahl.

17. Schaltungsanordnung nach Anspruch 16,
**dadurch gekennzeichnet,**
daß der Beschleunigungssensor ein akustischer Sensor oder ein Mikrofon ist.

18. Schaltungsanordnung nach einem der Ansprüche 16 oder 17,
**dadurch gekennzeichnet,**
daß der Beschleunigungssensor, der akustische Sensor oder das Mikrofon im Fußraum der Fahrgastzelle, an der Windschutzscheibe, am Armaturenbrett oder in einer Entfernung von bis zu drei Metern vom Fahrzeug entfernt angeordnet ist.

## Claims

1. Method of determining the rotational speed of an internal combustion engine, in particular a drive engine of a motor vehicle, connected to a generator, wherein the internal combustion engine (1) has a known number of cylinders and a known operating principle and wherein the generator (2) of the internal combustion engine (1) is driven with a fixed transmission ratio, in which the rotational speed of the internal combustion engine (1) is determined from the ripple of the rectified generator voltage fed into the vehicle electrical system (3), and the transmission ratio between generator (2) and internal combustion engine (1) is determined automatically in a learning phase, characterized in that the learning phase takes place by transforming the digitized components of the rectified output voltage of the generator (2) into the frequency domain, and the ratio of the frequency with maximum power density to the lowest frequency occurring is determined as transmission ratio between generator (2) and internal combustion engine (1), and in that, after the learning phase, the rotational speed of the internal combustion engine (1) is determined from the rotational speed of the generator and the said transmission ratio.

2. Method according to Claim 1, characterized in that the rectified output voltage of the generator (2) is band-pass-filtered, amplified and analogue-digital-converted and in that the sample values generated in this way are subjected to a discrete Fourier transformation.

3. Method according to Claim 1 or 2, characterized in that a window function that suppresses harmonics is placed over the expected rotational speed range in the frequency domain.

4. Method according to Claim 3, characterized in that the window function is selected according to the frequency range in which the expected rotational speed of the engine is situated.

5. Method according to Claim 3, characterized in that the sample values in the time domain are superimposed in the frequency domain with a window function prior to the transformation.

6. Method according to one of Claims 3 to 5, characterized in that the window function is formed by a sigma function, a Gaussian distribution curve, a Hamming function or a square function.

7. Method according to one of Claims 3 to 6, characterized in that, to check plausibility, a measurement is made of the idling rotational speed by means of an acceleration sensor.

8. Method according to Claim 7, characterized in that the acceleration sensor can be replaced by an acoustic sensor or a microphone.

9. Method according to one of Claims 7 or 8, characterized in that the acceleration sensor or the acoustic sensor or the microphone can be disposed at any desired position in or on the vehicle or in the surroundings of the vehicle.

10. Circuit arrangement for performing the method according to one of Claims 1 to 9, characterized by a band-pass filter (4) for filtering the voltage of the vehicle electrical supply (3), an analogue/digital converter (6) for digitizing the band-limited output signal of the band-pass filter (4) and an assembly (7) for performing a discrete Fourier transformation of the digitized signal and for converting the digitized signal into a power density spectrum and for determining the ratio of the frequency having maximum power density to the lowest frequency occurring in the power density spectrum and for determining the rotational speed of the engine from the rotational speed of the generator and from the said ratio.

11. Circuit arrangement according to Claim 10, characterized in that the band-pass filter (4) has an upper cutoff frequency of approximately 20 kHz.

12. Circuit arrangement according to Claim 10 or 11, characterized in that the analogue/digital converter (6) comprises a voltage comparator.

13. Circuit arrangement according to Claim 10, characterized in that an amplifier (5) is provided downstream of the band-pass filter (4).

14. Circuit arrangement according to one of Claims 10 to 13, characterized by a unit in the signal processing unit (7) for windowing the expected frequency range in order to suppress the harmonics.

15. Circuit arrangement according to one of Claims 10 to 14, characterized by a unit in the signal processing unit (7) for superimposing a window function on the sample values prior to the transformation to the frequency domain.

16. Circuit arrangement according to one of Claims 10 to 15, characterized by an acceleration sensor for determining sample values for a plausibility measurement of the idling rotational speed.

17. Circuit arrangement according to Claim 16, characterized in that the acceleration sensor is an acoustic sensor or a microphone.

18. Circuit arrangement according to one of Claims 16 or 17, characterized in that the acceleration sensor, the acoustic sensor or the microphone is disposed in the leg room of the passenger compartment, on the windscreen, on the dashboard or at a distance of up to three metres from the vehicle.

## Revendications

1. Procédé pour déterminer la vitesse de rotation d'un moteur à combustion interne relié à un générateur, notamment d'un moteur d'entraînement d'un véhicule automobile, selon lequel le moteur à combustion interne (1) possède un nombre connu de cylindres et travaille selon un principe de fonctionnement connu, le générateur (2) est entraîné par le moteur à combustion interne (1) avec un rapport de démultiplication fixe, pour lequel la vitesse de rotation du moteur à combustion interne (1) est déterminée à partir de l'ondulation de la tension redressée du générateur, introduite dans le réseau de bord (3), et le rapport de démultiplication entre le générateur (2) et le moteur à combustion interne (1) est déterminé automatiquement lors d'une phase d'apprentissage,
caractérisé en ce que la phase d'apprentissage s'effectue au moyen d'une transformation des composantes numérisées de la tension de sortie redressée du générateur (2) dans la gamme des fréquences et que le rapport de la fréquence pour la densité de puissance maximale à la fréquence la plus faible, qui apparaît, est déterminé en tant que rapport de démultiplication entre le générateur (2) et le moteur à combustion interne (1) et qu'après la phase d'apprentissage, la vitesse de rotation du moteur à combustion interne (1) est déterminée à partir de la vitesse de rotation du générateur et dudit rapport de démultiplication.

2. Procédé selon la revendication 1, caractérisé en ce que la tension de sortie redressée du générateur (2) est filtrée selon un filtrage passe-bande, est amplifiée et est soumise à une conversion analogique/numérique et que les valeurs d'échantillonnage obtenues de cette manière sont soumises à une transformation de Fourier discrète.

3. Procédé selon la revendication 1 ou 2, caractérisé en ce qu'une fonction fenêtre est appliquée sur la gamme des vitesses de rotation à laquelle on peut s'attendre, dans la gamme des fréquences, ce qui permet de supprimer des harmoniques.

4. Procédé selon la revendication 3, caractérisé en ce que la fonction fenêtre est sélectionnée en fonction de la gamme des fréquences, dans laquelle se situe la vitesse de rotation du moteur, à laquelle on peut s'attendre.

5. Procédé selon la revendication 3, caractérisé en ce qu'une fonction fenêtre est superposée aux valeurs d'échantillonnage sont superposées dans le domaine temporel, avant la transformation faisant passer à la gamme des fréquences.

6. Procédé selon l'une des revendications 3 à 5, caractérisé en ce que la fonction fenêtre est réalisée au moyen d'une fonction sigma, d'une courbe en cloche de Gauss, d'une fonction de Hamming ou d'une fonction quadratique.

7. Procédé selon l'une des revendications 3 à 6, caractérisé en ce que pour contrôler la vraisemblance, on effectue une mesure de la vitesse de rotation de ralenti à l'aide d'un capteur d'accélération.

8. Procédé selon la revendication 7, caractérisé en ce que le capteur d'accélération peut être remplacé par un capteur acoustique ou par un microphone.

9. Procédé selon l'une des revendications 7 ou 8, caractérisé en ce que le capteur d'accélération ou le capteur acoustique ou le microphone peut être disposé en un emplacement quelconque, sur ou au voisinage du véhicule.

10. Montage pour la mise en oeuvre du procédé selon l'une des revendications 1 à 9, caractérisé par un filtre passe-bande (4) servant à filtrer la tension du réseau de bord (3), un convertisseur analogique/numérique (6) pour numériser le signal de sortie à bande limitée du filtre passe-bande (4) et un module (7) pour la mise en oeuvre d'une transformation de Fourier discrète du signal numérique et pour la transformation du signal numérisé en un spectre de densité de puissance et pour la détermination du rapport de la fréquence présentant la densité de puissance maximale à la fréquence la plus faible, qui apparaît, dans le spectre de densité de puissance et pour déterminer la vitesse de rotation du moteur à partir de la vitesse de rotation du générateur et à partir dudit rapport.

11. Montage selon la revendication 10, caractérisé en ce que le filtre passe-bande (4) possède une fréquence limite supérieure d'environ 20 kHz.

12. Montage selon la revendication 10 ou 11, caractérisé en ce que le convertisseur analogique/numérique (6) est constitué par un comparateur de tension.

13. Montage selon la revendication 10, caractérisé en ce qu'un amplificateur (5) est prévu en aval du filtre passe-bande (4).

14. Montage selon l'une des revendications 10 à 13, caractérisé par une unité présente dans l'unité de traitement de signaux (7) pour réaliser le fenêtrage de la gamme des fréquences à laquelle on peut s'attendre, afin de supprimer les harmoniques.

15. Montage selon l'une des revendications 10 à 14, caractérisé par une unité située dans l'unité de traitement de signaux (7) pour superposer une fonction fenêtre aux valeurs d'échantillonnage avant la transformation dans la gamme des fréquences.

16. Montage selon l'une des revendications 10 à 15, caractérisé par un capteur d'accélération servant à déterminer des valeurs d'échantillonnage pour une mesure de vraisemblance de la vitesse de rotation de ralenti.

17. Montage selon la revendication 16, caractérisé en ce que le capteur d'accélération est un capteur acoustique ou un microphone.

18. Montage selon l'une des revendications 16 ou 17, caractérisé en ce que le capteur d'accélération, le capteur acoustique ou le microphone est disposé au niveau de l'espace, situé au niveau des pieds, de l'habitacle du véhicule, au niveau du pare-brise, au niveau du tableau de bord ou dans une position éloignée du véhicule d'une distance atteignant jusqu'à trois mètres.
